(19) **Europäisches Patentamt / European Patent Office / Office européen des brevets**

(11) **EP 4 481 640 A1**

(12) **EUROPEAN PATENT APPLICATION**

(43) Date of publication:
**25.12.2024   Bulletin 2024/52**

(21) Application number: **23180551.6**

(22) Date of filing: **21.06.2023**

(51) International Patent Classification (IPC):
**G06N 20/20** (2019.01)        **G06N 5/01** (2023.01)
**G06N 10/60** (2022.01)

(52) Cooperative Patent Classification (CPC):
**G06N 5/01; G06N 10/60; G06N 20/20**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
• **Tensor AI Solutions GmbH**
  **89284 Pfaffenhofen an der Roth (DE)**
• **Universität Ulm**
  **89081 Ulm (DE)**

(72) Inventors:
• **Felser, Timo**
  **89077 Ulm (DE)**
• **Rach, Niklas**
  **89134 Blaustein (DE)**
• **Trenti, Marco**
  **89075 Ulm (DE)**

(74) Representative: **Hoffmann Eitle**
**Patent- und Rechtsanwälte PartmbB**
**Arabellastraße 30**
**81925 München (DE)**

(54) **METHOD OF USING A TENSOR NETWORK FOR OPTIMIZING A PROCESS TOWARDS PROVIDING A TARGETED RESULT**

(57)    A method of using a tensor network for optimizing a process towards providing a targeted result, the method comprising the steps of: learning the tensor network using data comprising a set of input data and output data; computing at least one information-theoretical quantity of a plurality of features of the tensor network, thereby identifying a relevance value of each of the plurality of features; and identifying a predetermined number of most relevant features according to the relevance values

**FIG. 7**

## Description

Technical field

The present invention relates to a method of using a tensor network for optimizing a process towards providing a targeted result as well as an apparatus configured to perform the method.

Technical background

In the vast and continuously growing field of artificial intelligence (AI) and machine learning (ML), one important aspect, in particular when these methods are applied to real-life applications, is explainability of the used methods. Explainability of a method can be characterized, in very general terms, as the possibility of a user of the method to explain why the method does what it does and why it arrives at the result presented at the end of the method.

In conventional ML methods, explainability is oftentimes a not particular carefully considered quantity or even not considered at all. Instead, the quality of the final result and the performance of the processing are considered as the primary or even only important characteristics.

This leads to the problem that if it is desired, either by external regulations for the application but more importantly by the technical constraints of the application, to understand the ML method providing a result, i.e., how the result is achieved, these conventional methods are not able to answer this question sufficiently or at all.

One example of such a ML method are neural networks (NNs), in particular deep neural networks (DNNs) and convolutional neural networks (CNNs). While it has been demonstrated that NNs can reproduce and represent complex data structures, also with good overall performance, the explainability provided by these models is generally very limited. One reason for this can be seen in these models not providing an analytical comprehensibility, which can be connected to the highly non-linear nature of the models used for these methods. As a result, transparency, interpretability and verifiability of the predictions and results of these models is rather limited.

In more illustrative terms, conventional technology in the field is very often seen as a "black box", providing possibly accurate and reliable predictions and results, however, leaving all involved without any further insights how and why the results come into existence.

On the other side of the spectrum of ML methods, there are methods which admit a clear interpretation, leading to transparent and tractable methods. This can often be attributed to the models used being analytically fully comprehensible. Examples thereof are methods based on linear regression. However, the simplicity of these models leads to less precise result compared to sophisticated methods. Here, the possibility to clearly understand how the method comes to its results comes with the drawbacks of rather limited applications and reduced performance.

Moreover, the concepts used to obtain an analytically complete comprehension of simpler models cannot be extended and applied to more sophisticated methods such as NNs in a computationally efficient manner. Specifically, the established concepts can be applied only in an approximate manner, already significantly reducing the achievable explainability. Moreover, even these approximate quantities are computationally expensive to evaluate as they generally scale exponentially with the dimension of the ML problem at hand, thus making these approaches for any real-life problem impractical.

In summary, presently available technology is either explainable or able to reproduce/represent complex data structure, but what is missing is a technology that combines both: being able to reproduce complex data structure to a sufficient degree while also providing a sufficient amount of explainability regarding the how and the why.

Accordingly, there is a need for a ML technique that not only is able to provide accurate and reliable predictions by being able to model complex data structure but also provides the same in a (more) transparent, comprehensible and efficient manner.

Summary

The above problems, among others, are solved by the subject-matter of the independent claims. Preferred embodiments are given by the subject-matter of the dependent claims.

According to an embodiment of the present invention, there is provided a method of using a tensor network for optimizing a process towards providing a targeted result, the method comprising the steps of: learning the tensor network using data comprising a set of input data and output data; computing at least one information-theoretical quantity of a plurality of features of the tensor network, thereby identifying a relevance value of each of the plurality of features; and identifying a predetermined number of most relevant features according to the relevance values.

According to another embodiment of the present invention, there is provided an apparatus comprising a processor configured to perform a method using a tensor network for optimizing a process towards providing a targeted result, the method comprising of the steps of: learning the tensor network using data comprising a set of input data and output data; computing at least one information-theoretical quantity of a plurality of features of the tensor network, thereby identifying a relevance value of each of the plurality of features; and identifying a predetermined number of most relevant features according to the relevance values.

Tensor networks (TNs), in particular tree tensor networks (TTNs), are a recently proposed method to solve supervised learning problems, i.e., regression and classification tasks. Importantly, TNs have a particular structure that allows to identify how relevant certain information stored in the TN is. This not only provides explainability in the sense discussed above, but also allows to discard irrelevant and/or less relevant information from the TN, thereby improving the performance of the method and allowing to tailor the method to various implementations as well as hardware constraints. Importantly, discarding information, that is, modifying the TN can also be performed after the TN has been trained. In other words, the flexibility of TNs is not limited to the configuration before training but spans the entire process of using the TN.

The present invention can thus provide a ML method providing both explainability as well as the capability to reproduce complex data structures. In other words, the present invention provides a ML method that is not only on a at least comparable level as conventionally well-performing methods such as NNs regarding their accuracy and performance but also is able to provide insights and/or explanations into the model as well as the predictions made by the model.

Accordingly, the possibility to analyze combinations of input variables offers a deeper insight into the learned model and is suitable to represent even complicated relationships. As a consequence, the previous observed tradeoff between transparency and performance as discussed above can be overcome by the present invention.

In addition, the present invention provides a ML method with flexibility in their possible applications such that different constraints of the application can be taken into consideration; importantly, this can be achieved without re-training the TN.

While it becomes apparent from the above that the present invention has applications in all scenarios where machine learning is not only used to extract patterns from complex data structure but also to provide the same in a comprehensible and transparent manner, specific applications include at least autonomous driving, manufacturing and financial services.

Brief description of the drawings

Embodiments of the present invention, which are presented for better understanding the inventive concepts, but which are not to be seen as limiting the invention, will now be described with reference to the figures in which:

Figure 1     shows a graphical representation of a tensor network state;

Figure 2     shows a graphical representation of different tensors and examples of linear algebra computations in the graphical representation of tensor calculus;

Figure 3     shows a construction of a tensor network by combining the building block tensors;

Figure 4     shows a different tensor network representations for one- and two-dimensional quantum many-body wave-functions;

Figure 5     shows a graphical representation of different tensor contractions;

Figure 6     shows a graphical representation of tensor factorizations;

Figure 7     shows a flowchart of a method according to an embodiment of the present invention; and

Figure 8     shows a device embodiment of the present invention.

Detailed description

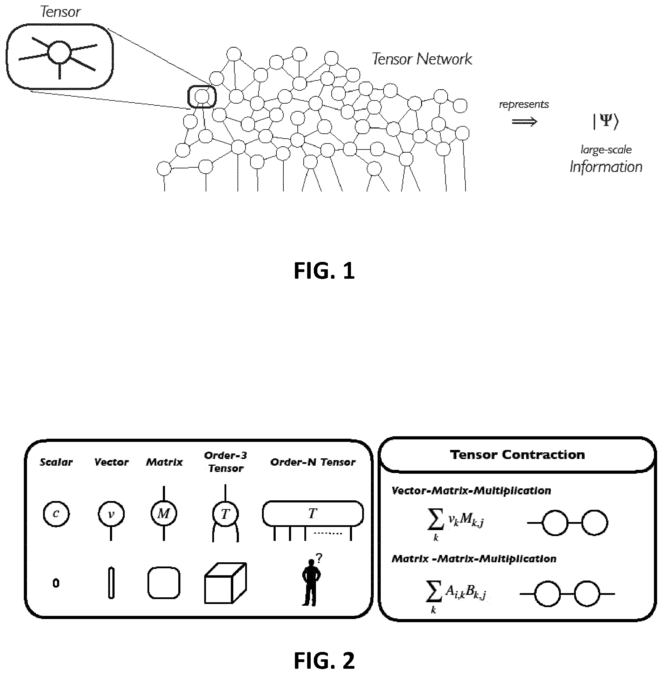

In the following, an introduction to the concept of tensor networks, in particular as used in the present disclosure, will be given with reference to Figures 1 to 6. More specifically, the concepts behind tensor network methods (TNMs) will be described in more details, starting with a brief motivation behind the development of TNs, moving on to the methodology of TNMs illustrating the basic concept behind them before going into more detail on different TN geometries and key numerical operations for executing a typical TN algorithm.

The fundamental idea of these methods is to efficiently parametrize large amounts of information or data in the form of a network consisting of several interconnected tensors. As the concepts behind tensor networks and TNM have been developed originally in connection with many-body quantum physics, originally, this represented information was a wavefunction of a quantum physical system.

Figure 1 shows a graphical representation of a tensor network state. Specifically, it shows a tensor (left inlet) as the fundamental building block for representing the quantum many-body state $|\psi\rangle$ via Tensor Networks. It is noted that in the field of tensor network, representation of these concepts is often done by means of graphical representation accompanying and/or replacing formulas for ease of (quick) understanding. Accordingly, each tensor is typically represented graphically by a circle-like object with several links which can be open or connected to other tensors and contains a certain amount of information about the state.

Thus, as illustrated in Figure 1, the data is decomposed into a set of (local) tensors: Tensors are the fundamental building blocks for representing information via tensor networks. Accordingly, a TN is composed of local tensors which are connected to each other and hold the information encoded in the complete network.

One important aspect of TNs in the context of quantum physics is that while the total number of parameters of a many body quantum system of $N$ constituents scales exponentially with N, i.e., $\mathcal{O}(e^N)$, the formulation as a TN introduces a further parameter, the bond dimension $m$, which represents the dimension of the bond between local tensors. The representation as a TN scales polynomially in $N$, while the choice of the bond dimension $m$ defines an upper bound for the amount of information provided by the representation, or more concretely, the shared information between the two tensors connected by the bond. In terms of quantum-theoretical concepts, this can be linked to the entanglement present in the system.

As a consequence, increasing the bond dimension $m$ allows to control the amount of information captured within a Tensor Network, and thereby tune its representational power or compression rate with respect to the exponentially large space.

This concept, originally developed in the context of quantum physics, is however not bound to the quantum realm but instead can be applied to any object of finite dimension. The TN then corresponds to a representation of this finite dimensional object, wherein the introduction of the local tensors and the bond dimension $m$ connecting them allows for the above-mentioned possibility to tune the details of this representation.

Figure 2 shows a graphical representation of different tensors and examples of linear algebra computations in the graphical representation of tensor calculus. On the left, graphical representations of different tensors are shown, starting from a scalar $c \in \mathbb{C}$, also named a zero-link tensor, a $v \in \mathbb{C}^{d1}$, also named a one-link tensor, a matrix $M \in \mathbb{C}^{d1 \times d2}$, also named a two-link tensor, a three-link tensor $T \in \mathbb{C}^{d1 \times d2 \times d3}$ up to a tensor with an arbitrary number of links (or bonds, these terms are used synonymously). Oftentimes, the term "rank of the tensor" (or "order of the tensor") is to indicate how many links/bonds it has: A tensor of rank R is a R-link tensor.

On the left, examples of linear algebra computations in the graphical representation of tensor calculus are shown. A multiplication of a vector with a matrix can be represented by connecting one of the bonds of the matrix with the bond of the vector. The resulting object has only one open link, thus is a vector in line with common linear algebra. Similarly, a multiplication of two matrices can be represented by connecting one of the bonds of the first matrix with one bond of the second matrix. It becomes clear that in particular when handling tensors of higher rank, the graphical representation provides a certain level of convenience and brevity without losing any accuracy for the skilled reader, in particular by the implicit indication of a summation by connecting tensors via links.

In a nutshell, one can say that TN are represented by circles (or similarly closed objects) for the tensors and lines for the links/bonds, see Figures 1 to 3. Each link connecting two different tensors indicates a contraction over a coinciding index. This graphical representation allows the expression of complex equations of the underlying tensor algebra in visual diagrams. It is noted that depending on the context and the field in which these concepts are applied, slightly different notations have been established, however, without affecting the applicability of the underlying ideas.

From a computational point of view, a single tensor T is a multidimensional array of numbers and can be seen as the generalization of the well-known vectors and matrices from linear algebra: While a vector is an element of a single vector space $V \in \mathbb{C}^d$, and a matrix is assigned to the product space of two vector spaces $V_1 \times V_2$, each of dimension $d1$ and $d2$, a tensor represents information in a general space composed out of arbitrarily many vector spaces $V_1 \times V_2 \times ... \times V_r$.

In fact, a vector can be seen equivalent to an order-1 tensor where the numbers only run in one direction by the index $i_1$, a matrix forms an order-2 tensor with two indices $i_1$ and $i_2$ for its row and column respectively. Equivalently, one may see an order-3 tensor $T \in V_1 \times V_2 \times V_3$, as a three-dimensional box of numbers with one index for each dimension.

This conceptual procedure can be extended towards tensors with higher-order r, whereas the lack to imagine these objects geometrically does not stop the concept.

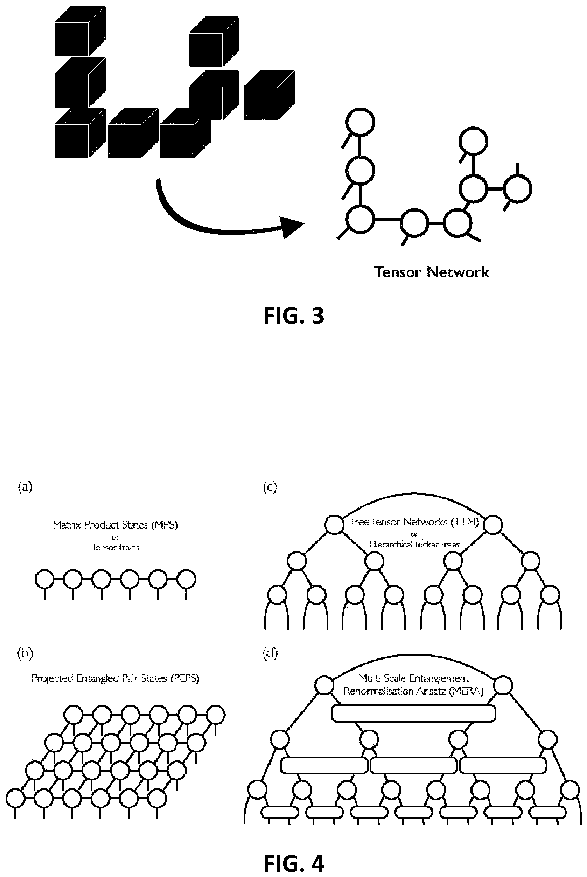

Figure 3 shows a construction of a tensor network by combining the building block tensors in line with the concepts shown in Figure 2. In this example, the network is composed of tensors of order 3 only.

Moreover, depending on the inner connections between the tensors, there are numerous ways to structure a tensor network in different network geometries.

Here we present the most commonly used Tensor Network geometries and give an overview of typical problems in which the different networks are frequently used.

Figure 4 shows a different tensor network representations for one- and two-dimensional quantum many-body wave-functions. Specifically, Figure 4 shows (a) Matrix Product States (MPS) representation for a one-dimensional quantum system, (b) a Projected Entangled Pair States (PEPS) representation for a two-dimensional quantum system, (c) a Tree Tensor Network (TTN) representation for a one-dimensional quantum system, and (d) a Multiscale Entanglement Renormalization Ansatz (MERA) representation for a one-dimensional quantum system..

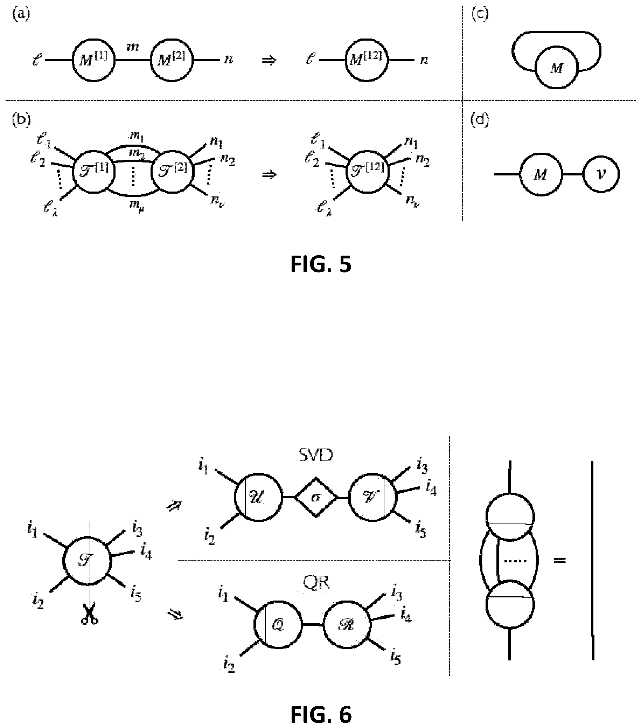

In the following, tensor operations will be discussed, also with reference to Figures 5 and 6.

Figure 5 shows a graphical representation of different tensor contractions and Figure 6 shows a graphical representation of tensor factorizations.

Specifically, Figure 5 shows: (a) a Matrix-Matrix-multiplication can be generalized to (b) a tensor contraction for two tensors $\mathcal{T}^{[1]}$ and $\mathcal{T}^{[2]}$ of arbitrary orders, (c) a special kind of tensor contraction is the trace of an order-2 tensor, i.e., a matrix, and (d) a vector-matrix multiplication can be written in the graphical tensor notation as well.

Further, Figure 6 shows on the left the decomposition of a tensor $\mathcal{T}$ using a Singular Value Decomposition (SVD) (top) or a QR-decomposition (bottom). The SVD decomposes $\mathcal{T}$ into three tensors: Two so-called isometries $\mathcal{U}$ and $\mathcal{V}$ with certain unitarity properties and a diagonal matrix $\sigma$ containing the singular values. The QR-decomposition results in an isometry $\mathcal{Q}$ and a second tensor $\mathcal{R}$. As shown on the right, all isometries become identities when contracted with their complex conjugate over the open links of the decomposition.

Tensor Transposition:

Similar to the matrix transposition, the tensor transposition reshapes the entries of a tensor by reordering its indices. However, considering the higher order of a tensor, and thereby the several different indices, this idea generalizes to a permutation of the tensor links.

Fusing and splitting:

Another form of reshaping a tensor without changing its information content is the operation of fusing or splitting links. The former operation combines several adjacent links of a tensor into a single fused link while the latter describes the inverse operation which splits one single fused link again into its original decomposed links.

Contraction:

The contraction of two tensors generalizes the matrix-matrix-multiplication towards the tensor algebra: It combines the two tensors A and B to a resulting third tensor $C = AB$ with different properties and elements while preserving the underlying information content. This operation is one of the most time-consuming parts of a tensor network algorithm. Differently from the matrix-multiplication, here the operands can be of arbitrary order so that the tensor contraction can be performed over several coinciding links $m_1, ..., m_\mu$ as illustrated in Figure 5. In this tensor algebra, the matrix-multiplication itself can be seen as a contraction of two order-2 tensors over the coinciding link $m$, see also Figure 5(a).

Factorization:

Each tensor can be factorized by taking advantage of classical linear algebra by using matrix decompositions. Therefore, the tensor to be decomposed will be reshaped into an order-2 tensor by fusing the links of two different subsets as mentioned above. After the factorization, the links are properly split with respect to the two different sets of its links. As in linear algebra, the most prominent decompositions for tensors (applied in matrix-shape) are the Singular Value Decomposition (SVD) and the reduced QR-decomposition as illustrated in Figure 6.

In practical applications, the SVD is a key tool of Tensor Networks: On one hand, the SVD enables to establish a desired gauge in a Tensor Network for more details on gauge-freedom in Tensor Networks which in return can provide higher efficiency in certain computations, such as the calculation of observables. On the other hand, the singular values can be used to measure entanglement properties within loop-less networks, such as the TTN as described elsewhere in this document. Furthermore, the SVD can be deployed to efficiently compress a tensor or even a complete Tensor Network.

In the context of Tensor Network Machine Learning, a tensor networks ensemble is a set of independent trainable tensor networks. Each TN can be trained (supervised, unsupervised or reinforced) autonomously on the same dataset or sub-parts of it, e.g., different batches or different subsets of features. The outputs are then merged and the quality of every single network can be evaluated comparable to the evaluation of a Random Forest (as an ensemble of decision trees). In the case of classification learning, for instance, a typical procedure for merging the predictions is by a majority vote.

Additionally, the well-established concept of random forests which consists of many binary decision trees can be applied to tensor network as well, leading to a random forest of tensor networks, for example a random tree of tree tensor classifiers. This random forest of tensor networks can be understood as the ensemble. The underlying concept is thus that a large number of individual TNs function as an ensemble. Each individual TTN in the forest is independent and the result provided by the forest as a whole obtained by, for example, a vote.

One reason the random forest model works so well is that a large number of relatively uncorrelated TNs operate as a "committee" and will outperform any of the individual TNs making a poor decision. Thus, the TNs together can be seen as protecting each other from their individual errors - as long as they are not all consistently wrong in the same direction. Even if some TNs predict wrongly, many others will be predicting correctly. So as a group, the TNs are able to move in the right direction. The key to a good performance of a forest ensemble, however, is that the individual TNs are trained as uncorrelated as possible.

Just like in the random forest, keeping the behavior of each individual TTN not to be overly correlated can be done by the following strategy: Instead of considering all possible features for a TN in the Tensor Forest, we select a random subset of features for each individual TN. Further, we can randomize the geometry (topology) of each TN, i.e., the hierarchical order in which the input is processed. This forces greater variation among the TNs in the ensemble and ultimately results in greater diversification among the TNs.

For further documentation on tensor networks and their application to machine learning, reference is made to the following:

M. Stoudenmire and D. Schwab, Supervised Learning with Tensor Networks, Advances in Neural Information Processing Systems 29, 4799 (2016),

E Miles Stoudenmire, Learning relevant features of data with multi-scale tensor networks, 2018 Quantum Sci. Technol. 3 034003, and

S. Montangero, Introduction to Tensor Network Methods, Springer Nature Switzerland AG 2018.

Further, in the following various embodiments of the present invention will be presented.

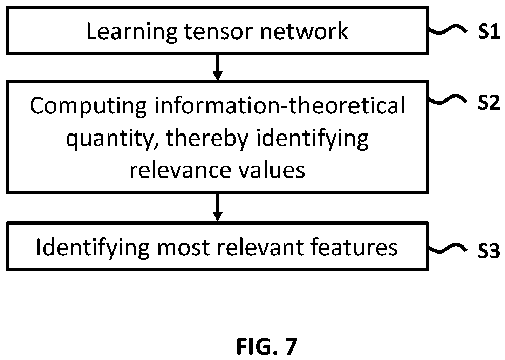

Figure 7 shows a flowchart of a method according to an embodiment of the present invention. Specifically, Figure 7 shows a method of using a tensor network for optimizing a process towards providing a targeted result, the method comprising the steps of: learning the tensor network using data comprising a set of input data and output data (S1); computing at least one information-theoretical quantity of a plurality of features of the tensor network, thereby identifying a relevance value of each of the plurality of features (S2); and identifying a predetermined number of most relevant features according to the relevance values (S3).

In the context of the present disclosure, the term "process" is to be understood as not particularly limiting and shall include all types of processes in which data processing including ML and AI techniques can be applied. Examples thereof range from decision-making processes in the context of autonomous driving to manufacturing-controlling processes as well as decision-making processes in the context of financial decisions.

Accordingly, also the term "targeted result" is not to be understood as particularly limiting and shall include all types of results that can be conceived as reasonable targets of the process. Examples thereof range from a target to maximize the output of the process, maximize the ratio of output and input of the process, minimize the process duration or the like. It is further understood that minimizing and maximizing are part of optimizing and mathematically practically equivalent.

In step S1 of learning the tensor network using data comprising a set of input data and output data, it is understood that the input data corresponds to the input data of the process and the output data corresponds to the output data of said process. This data may be obtained each by experimental/empirical data of the process but may also be obtained by simulations of the process.

Accordingly, this step can be understood as the tensor network learning how to reproduce and/or represent the complex data structure underlying the process. As indicated above, tensor networks have been shown to have at least comparable capabilities to neural networks in this regard.

In step S2 of computing at least one information-theoretical quantity of a plurality of features of the tensor network, thereby identifying a relevance value of each of the plurality of features, the particular nature of tensor networks can be employed. Specifically, as discussed above, individual tensors of the tensor network can be addressed by the operations and hence information on this single-tensor-level can be obtained.

This aspect, which finds its root in the linear nature of tensor networks, distinguishes tensor networks from neural networks whose highly non-linear models do not allow for corresponding operations and hence information on a comparable level can only be obtained based on approximation and nevertheless requires a substantial computational effort.

Details regarding the information-theoretical quantity and its calculation are provided elsewhere in this document.

In step S3 of identifying a predetermined number of most relevant features according to the relevance values, the obtained information is used to identify which parts, i.e., features, of the tensor network are most relevant for representing and/or reproducing the complex data structure underlying the process under consideration.

This can be achieved by ordering the features in a descending manner according to their relevance values and then identifying only the first according to the predetermined number.

In this context, it is to be understood that "predetermined number" is not limited to a fixed number of most relevant features but also to include a certain percentage of the total number of features. In more illustrative words, "predetermined number of most relevant features" is to be understood to cover both "the five most relevant features" as well "the one percent most relevant features". Moreover, the "predetermined number of most relevant features" may also be chosen such that the information content of these "most relevant features" is bigger than a predetermined threshold, that is, the "most relevant features" are able to represent/reproduce a significant part of the complete tensor network.

It is noted that the method includes both the case where a single information-theoretical quantity is calculated, in which the relevance value would correspond to this information theoretical quantity evaluated for the respective features of the tensor network, but also covers the case of calculating several information-theoretical quantities for each feature of the tensor network and then calculating the relevance value according to these several information-theoretical quantities evaluated for the respective features of the tensor network, i.e., further processing these values. This may be done, for example, by a (weighted) average of the values or any other meaningful way.

In line with the present disclosure as a whole, this can be understood as providing "global explainability" to the machine learning method. That is, an explanation of which of the features of the input data as whole are particularly relevant for the tensor network predictor, meaning using the tensor network to predict output data from input data (and in turn also which are not particularly relevant) can be provided. The term "global" is here to be understood in the sense that this explainability is not related to a single input data point but extracted from the tensor network predictor as predictor-specific information-theoretical quantities indicating the relevance learned on the whole input data set.

In one embodiment of the present invention, the method further comprises the step of re-learning the tensor network with data restricted to the most relevant features (S4).

Re-learning the tensor network with data restricted to the most relevant features can allow to achieve a computationally more efficient tensor network, both in terms of the training of the network and the usage of the network as a predictor. This may in particular be achieved as a trade-off with the accuracy of the tensor network. Moreover, re-learning with only the most relevant features may produce less noise and biases in the tensor network predictor and moreover may save data and storage. Furthermore, it may allow to reduce the amount of resources used in the process of collecting the data, for example by requiring less sensors in the process or by requiring less data to be collected. This may also reduce costs, such as legal cost for data under GDPR.

In one embodiment of the present invention, the method further comprises the steps of: finding restricted input data restricted to the most relevant features that minimizes a distance between the tensor network and the targeted output (S5); applying the restricted input data to the process, thereby obtaining restricted output data (S6); and determining, by comparing the restricted output data with the targeted result, whether the restricted input data is targeted input data (S7).

In step S5, the minimization may be performed by using a simplex optimization, but any established optimization method may be applied. This step may be understood as exploring the landscape of the complex data structure reproduced/ represented by the tensor network in order to find the input data that comes closest to the targeted result. Moreover, as the dimension of the complete tensor network may be rather big, and the tensor network reduced to its most relevant features may be much smaller without losing much information content. Consequently, an optimization within this reduced search space is much more efficient.

In step S6 of applying the restricted input data to the process, thereby obtaining restricted output data, the restricted output data may be output data obtained by applying restricted input data to the process.

Lastly, step S7 of determining, by comparing the restricted output data with the targeted result, whether the restricted input data is targeted input data can be understood as a step of confirming whether the result of the optimization is successful. Such a step is not only generally good practice but may in particular be reasonable in view of restricting the "full" tensor network to the network using only the most relevant features.

In one embodiment of the present invention, the method further comprises the steps of: adding, if the restricted input data is not targeted input data, the pair of restricted input data and restricted output data to the data (S8).

In other words, in this embodiment, the pair of generated data comprising the restricted input data and restricted output data, even if not resulting in the targeted result, can be used to further improve the tensor network and its capability of representing/reproducing the process.

In one embodiment of the present invention, the training is one of supervised learning, unsupervised learning or reinforcement learning. In other words, the type of learning employed for implementing the present invention is not particularly limited and any conventional learning approach can be applied.

In one embodiment of the present invention, the learning is performed locally or globally or using automatic differentiation. Automatic differentiation generally refers to a set of techniques for evaluation a (partial) derivative of a function specified by a computer program.

Locally performed learning can, for example, be implemented by an optimization inspired by Density Matrix Renormalization Group, as for example done in "Supervised Learning with Quantum-Inspired Tensor Networks" by E. Miles Stoudenmire and David J. Schwab, arXiv:1605.05775.

Globally performed learning can, for example, be implemented by a Riemann optimization as described in "Riemannian optimization of isometric tensor networks" by Markus Hauru, Maarten Van Damme and Jutho Haegeman, SciPost Phys. 10, 040 (2021).

In one embodiment of the present invention, the tensor network is a tree tensor network and/or a tree tensor ensemble.

As discussed above, the particular arrangement of the tensors as a tree tensor network is advantageous for some tensor network operations. In fact, the scaling as a function of the number of tensors of several operations regularly performed depends on the arrangements of the tensors. Tree tensor ensemble relates to an ensemble, that is, a plurality, of tree tensor networks and may thus also be referred to as a tree tensor network ensemble.

The complexity of the Tensor Network geometry directly impacts (i) the numerical complexity (as, for example, looped tensor networks require more computational resources that loopless tensor networks) and (ii) the problem complexity they are able to solve (as, for example, complex structures can incorporate large and long-range correlations within the learned patterns while less complex structures eventually fail to faithfully represent more complex data patterns).

Further, with looped structures, one does not have the ability to extract some of the relevant information directly from the network, such as the entanglement entropy, thereby removing the explainability aspect in many scenarios.

Matrix Product States, also referred to as tensor trains, were the first developed geometry of Tensor Networks. The geometry of an MPS is intuitively suited for a one-dimensional system quite: As illustrated in Figure 5a, each tensor has one link attached for each data input feature and two internal links connecting the tensors into a flat train of tensors (except for the boundary tensors). In particular for prominent optimization algorithms, MPS are the most efficient network from a computational point of view. However, the MPS by design does not fulfil the underlying complex scaling capabilities to capture all the information required for complex data patterns, e.g., in high-correlated and long-range patters. To compensate for this drawback, the MPS requires an exponentially large bond-dimension for higher dimensional systems and thus eventually fails to faithfully describe the relevant patterns for the data problem.

The Projected Entangled Pair States (PEPS) can represent data patterns in a two-dimensional system with one tensor for each data input feature, comparable to the MPS in one dimension. These tensors are then connected through a grid mimicking a lattice as shown in Figure 5b, yielding a Tensor Network with loops. Thus, the PEPS may be seen as the most intuitive - and potentially most powerful - representation of a two-dimensional data problem and satisfying better scalability for more complex patterns. However, the PEPS, as it is typical for looped Tensor Networks, suffers from a higher numerical complexity and lacks an efficient calculation of expectation values which are used to extract the relevant information. Thus, by design it does not offer a good numerical scalability or a proper structure to extract relevant information for the explanation of the predictor.

In contrast to MPS, MERA can handle the entanglement entropy in complex systems and scale better with the complexity of the data problem. Due to its advanced structure consisting out of alternating layers of isometries and disentanglers, i.e., tensors with unitary conditions, (see Figure 5c), it can, in contrast to PEPS, be efficiently contracted, however, optimizing MERA cannot be done efficiently. Moreover, some of the measurements required for many explainability aspects cannot be extracted from the network, for example the entanglement entropy.

As a good compromise Tree Tensor Networks (TTNs) benefit from a reasonably low numerical complexity due to their hierarchical network geometry and allow universal, polynomial-scaling contraction schemes to calculate expectation values exactly.

Both, the exact contraction and the optimization algorithms have a complexity that allows typical bond-dimensions to exceed 1000. Thus, they offer a more complex structure as an MPS to tackle more complex problems, offer a reasonable computational scaling and crucially keep all the advantages for extracting relevant information for the explainability of the network. For sake of completeness, it is mentioned that the MPS is a trivial substructure of a TTN.

In one embodiment of the present invention, the method further comprises the steps of: computing a singular value decomposition of the tensor network, thereby obtaining a set of singular values corresponding to the tensor network (S9); removing from the set of singular values a subset of singular values, thereby obtaining the reduced tensor network (S10); and estimating an error introduced by removing the subset of singular values using the set of singular values (S11).

In step S10, various criteria can be used. For example, a fixed percentage of singular values can be discarded, all singular values smaller than a predetermined threshold can be discarded, or all singular values smaller than a fixed percentage of the biggest singular value can be discarded. In other words, any possible set of the singular values can be discarded.

An important aspect of this step is that it can be performed without the need to re-train the tensor network. In other words, this adjustment of the tensor network to constraints, the desire to make the tensor network be faster in its evaluation and/or require less data storage can be done with very little computational effort.

Different from that, the structure of conventional networks such as NNs is fixed such that any such adjustment requires re-training of the network, a rather computationally expensive process.

In one embodiment of the present invention, in line with the above, the subset is a subset of smallest singular values. In line with the above, this allows to discard those parts of the tensor network that contains the least information.

In one embodiment of the present invention, a representation of the tensor network is adjustable to a type and/or configuration of hardware used.

This achieves portability from one hardware type to another hardware type, but also allows adjustments when hardware constraints are adjusted. For example, if less resource are to be used by the tensor network, the tensor network can simply be reduced in size in the post-learning phase without any need to re-learn the tensor network.

In one embodiment of the present invention the type of hardware is one of: one or more central processing units, one or more graphics processing unit, one or more field-programmable gate array, one or more quantum processing unit, one or more quantum computer, or one or more tensor processing units. In other words, the present invention and the tensor networks discussed therein are not limited to any computational platform but can instead be applied to virtually every platform. It is moreover noted that to the present invention having its roots in quantum physics, its application to quantum computers (i.e., quantum processing units) is expected to require less efforts when porting from classical hardware.

In one embodiment of the present invention, the method further comprises the steps of: computing at least one information-theoretical quantity of each feature of any input data or restricted input data of the tensor network with respect to the output data or restricted output data, respectively, thereby identifying a contribution of each of the features of the tensor network to the output data or restricted output data, respectively.

In other words, in this embodiment, the computation of the at least one information-theoretical quantity is directed at finding the contribution made by each input feature to a prediction/result. This is also termed "local explainability" as it is directed at local level of the single data points compared to the above discussed "global explainability".

In one embodiment of the present invention, the method further comprises the steps of: computing at least one correlation among the input data and/or output data (S11).

Correlations among (input and/or output) data can be seen as a further example of an information-theoretical quantity that provide insight into the underlying structure of the process.

In one embodiment of the present invention, the process may be a manufacturing process, and the targeted result represents a manufactured product or at least one attribute of the manufactured product.

Many manufacturing processes are based on creating sample components with fixed configurations and then evaluating these samples. This is especially relevant for the transfer of manufacturing steps to new machines with unknown defects. From the generated samples, the correct input variables for a (preferably) defect-free component are now to be determined. This is possible with tensor networks without knowledge about the exact nature of the approximated function via generative learning, i.e., the creation of new data points for given output parameters.

The main requirement in this scenario is the data efficiency of the approach, as one data point in this setup corresponds to the completion of a complete manufacturing process (including evaluation).

Therefore, a data efficient, closed-loop approach is proposed that starts with a minimal set of training data points and incrementally suggests control parameters for the generation of the next sample(s) that presumably lead to an output that is close to the desired one. These newly generated samples can then in the next iteration be used for training and/or fine tuning of the model.

The general idea behind this application scenario is hence to infer reasonable control parameters for a machine from sample data and the known optimal result. For example, a machine to automatically build a specific technical component with a fixed length $L_x$ and width $L_y$ can be used to generate a number of training samples with arbitrary input (control) parameters. The measured length and width then serve as a labelling for the corresponding input parameters, thereby forming a complete data point for supervised learning. Given a large enough number of such training samples, a (tensor network) regression model can be trained in the first step to identify relevant control parameters, i.e., to answer the question which parameter influences the output and how strongly. In the second step, the parameters that are identified as influential can then be used to train (and evaluate) the final regression model. Given the trained model, the final step is then to identify the optimal configuration of control parameters to get the desired output $\tilde{L}_x$ and $\tilde{L}_y$, i.e., to generate the optimal sample. This can be addressed in two ways, either through a model agnostic approach that combines the trained regression model with a direct optimization approach or through a tensor network specific generative learning. If desired, the optimal sample can then be used to create new samples and to further fine-tune the model and the control parameter selection.

It should be noted that the general approach is model agnostic in the sense that it does not depend on a particular kind of machine learning model. Instead, it builds on certain explainability aspects of the model, i.e., the identification of important (influential) features and the generative approach. As both are core capabilities of the tensor network regression, the corresponding models are a natural choice for the proposed pipeline.

Generative learning has the advantage of being able to derive input variables for a desired output variable from learned models without further training (inversion of the model), which, as demonstrated above with the example of manufacturing, allows the application in data-based control cycles.

In one embodiment of the present invention, the process may be autonomous driving, and the targeted result is a decision made during autonomous driving.

On a very general level, it can be said that autonomous systems, among them likely most known autonomously driving vehicles, require a clear understanding how the decisions taken come into existence.

Moreover, autonomous vehicles rely on real-time detection and interpretation of sensor data. With respect to this real-time capability, the reduction of input parameters is a prerequisite for the successful application of complex machine learning models. This reduction is provided in the TN case by model transparency as follows: Due to the explainability, the information content of all input parameters can be determined, which allows (even after training) a qualified selection of the most important input variables. Focusing on these relevant input variables reduces the complexity of the model and thus the computation time.

Specifically, for a real-life execution of a machine learning algorithm in the perception of the environment, it is especially important that the algorithms are well-embedded in the hardware, that they can be executed as fast as possible while predicting as accurate as possible, and that they are sensitive to potential errors. The prediction of the TN can be implemented specifically for any type of hardware such as a GPU, a FPGA, a CPU or any other hardware on the board computer as a set of matrix-matrix-multiplications which is predefined from the trained model. Thus, the TNs can be adapted perfectly to any hardware. Further, the truncation of the TN to a model with less parameters without the need of relearning the model not only improves this flexibility with respect to the hardware, but further enables to balance prediction speed versus prediction accuracy. With the explainability, we can as well give reasoning behind the predictions which can be evaluated regarding the input sensitivity. Putting all together, several models with increasing complexity tailor-made for the hardware can be provided. Knowing for each model the required time for prediction and the expected accuracy, fast predictions for safety critical situation with less complex models as well as accurate predictions for long term situations can be made; clearly, dynamically choosing in between both poles is possible as well.

In one embodiment of the present invention, the process may be a financial decision process, and the targeted result is a decision made during the financial decision process.

Specifically, for machine learning methods to be applied in financial decision-making processes such as, for example, the decision whether a credit request is to be granted or not or the calculation of a credit score, transparency of individual decisions is a basic requirement. Since in tensor networks individual decisions are also possible for combinations of input parameters, they are particularly suitable for this application area.

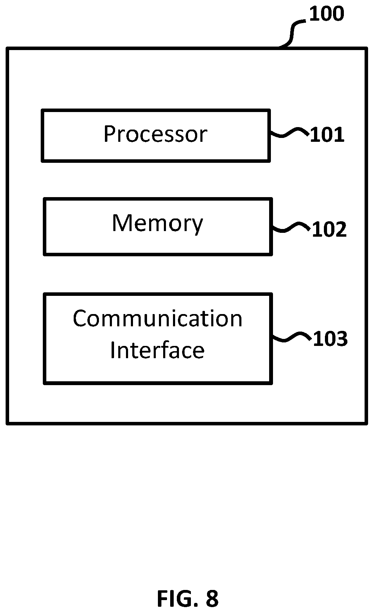

In one embodiment of the present invention, an apparatus is provided. Specifically, as shown in Figure 8, there is provided an apparatus 100 comprising a processor 101 configured to perform a method using a tensor network for optimizing a process towards providing a targeted result, the method comprising of the steps of: learning the tensor network using data comprising a set of input data and output data; computing at least one information-theoretical quantity of a plurality of features of the tensor network, thereby identifying a relevance value of each of the plurality of features; and identifying a predetermined number of most relevant features according to the relevance values.

The apparatus 100 may comprise the processor 101, a memory 102 as well as a communication interface 103. The memory 102 may store code or may have access to code that instructs the processor 101 to perform the steps of any method embodiment of the present invention as elaborated above. The communication interface 103 may be adapted for receiving communication data over a network. The network may be wired or wireless network.

The apparatus 100 can generally be a computer but is not further limited. In particular, in similar fashion as indicated above, the specific hardware used for realizing the apparatus 100 is not limited and can be both, conventionally available computing hardware as well as yet to be fully developed quantum computing hardware.

The processor 101 may be embodied by one or more processing units, such as a central processing unit (CPU).

The memory 102 which can be embodied by local memory which may include but not limited to, a read-only memory (ROM), a random-access memory (RAM), a programmable read-only memory (PROM) and an electrically erasable programmable read-only memory (EEPROM).

The communication interface 103 may be adapted for providing and/or receiving data from the processor 101 and for providing and/or receiving data from the memory 102 over a communication network. The communication network may be a wired or a wireless network.

In the following, further details of information theoretical concepts regarding the measurement of information within a tensor network will be discussed.

One of the major benefits of Tensor Networks that make a prime tool for studying quantum many-body physics is the accessibility of information within the network, thereby allowing to efficiently measure information quantities such as entanglement entropy and correlations.

Based on these quantum-inspired measurements, corresponding protocols can be introduced when applying TNs in machine learning. Specifically, there exist protocols for exploiting the information encoded and accessible in the TN in order to rank the input features according to their importance for the classification.

To this extent, first, some concepts of information theory are presented to provide a proper overview and explain how these concepts can be applied in the context of the present invention.

Entropy:

In information theory, entropy is a measure of the information content inherent in the possible outcomes of variables, such as e.g., a classification. In TNs such information content can be assessed by means of the entanglement entropy $S$ which describes the shared information between TN bipartitions. The entanglement entropy $S$ is measured via the Schmidt decomposition, that is, decomposing the state $|\Psi\rangle$ into two bipartitions $\left|\Psi_k^A\right\rangle$ and $\left|\Psi_k^B\right\rangle$ such that

$$|\Psi\rangle = \sum_k \lambda_k \left|\Psi_k^A\right\rangle \otimes \left|\Psi_k^B\right\rangle$$

where $\lambda_k$ are the Schmidt-coefficients that are non-zero, normalized singular values of the decomposition. It is noted that while this section, for the sake of illustrating the connection to concepts based in quantum mechanics and quantum information theory, uses a formalism inspired by this part of physics, the concepts are by no means limited thereto, but can instead be applied to the realm of tensor networks without further ado - also and not least because tensor networks equally find their roots in quantum physics. The entanglement entropy is then defined as $S = \sum_k \lambda_k^2 \ln \lambda_k^2$ with $ln$ being the natural logarithm. Consequently, the minimal entropy $S = 0$ is obtained only if we have one single non-zero singular value $\lambda_\kappa = 1$. In this case, we can completely separate the two bipartitions as they share no information. On the contrary, higher $S$ means that information is shared among the bipartitions.

In the ML context, the entropy can be interpreted as follows: If the features in one bipartition provide no valuable information for the classification task, the entropy is zero. On the contrary, $S$ increases the more information between the two bipartitions are exploited. This analysis can be used to optimize the learning procedure: whenever S = 0, the feature can be discarded with no loss of information for the classification. Thereby, a second model with fewer features and fewer tensors can be introduced. This second, more efficient model results in the same predictions in less time, i.e., with less overall resources.

On the contrary, a high bipartition entropy highlights which feature - or combination of features - are important for the correct predictions.

Correlation:

The second set of measurements one can take into account are the correlation functions

$$C_{i,j}^l = \frac{\langle \Psi_l | \sigma_i^z \sigma_j^z | \Psi_l \rangle}{\langle \Psi_l | \Psi_l \rangle}$$

for each pair of features located at site i and j and for each class $l$. Herein, class refers to groups (classes) of a classification. For example, if handwritten numbers are to be classified, the classes would be these numbers, that is, "1", "2", "3", etc. The operators $\sigma_i^z \sigma_j^z$ depend on the feature map. For example, of the feature map is spin map, the operators $\sigma_i^z \sigma_j^z$ are the Pauli matrices well known in the field of quantum physics. The correlations offer an insight into the possible relation among the information that the two features provide. In case of maximum correlation or anti-correlation among them for all classes $l$ the information of one of the features can be obtained by the other one (and vice versa), thus one can be neglected. In case of no correlation among them, the two features may provide fundamentally different information for the classification. The correlation analysis allows pinpointing if two features give independent information. However, the correlation itself - in contrast to the entropy - does not tell if this information is important for the classification. In conclusion, based on the previous insights, namely (i) a low entropy of a feature bipartition signals that one of the two bipartitions can be discarded, providing negligible loss of information and (ii) if two features are completely (anti-)correlated we can neglect at least one of them, there exist protocols enabling to filter out the most valuable features for the classification.

Shared Information:

In addition to the entanglement entropy $S$ discussed above, one can also calculate the mutual information $I_{ik} = S_i + S_k - S_{ik}$ of two different features $i$ and $k$ attached to a same tensor by measuring the entanglement entropy on a higher layer within the tensor network. Specifically, $S_i (S_k)$ is the entropy corresponding to the feature $i(k)$ and $S_{ik}$ is the entropy of the combined features. If, for example, the two features provide the same entropy $S_i = S_k$ and moreover the coarse-grained space consisting of both features provides the exact same entropy $S_{ik} = S_k = S_i$, it follows that the information obtained from the two features is equivalent. Thus, in this case, one of the two features can be neglected without loss of information. This idea can be extended to the mutual information of different clusters of input features and hence allows a direction for a deeper understanding of information captured within the TN.

In a similar manner, also the Kullback-Leibler Divergence may be used as a metric instead of the above discussed quantities.

A further information-theoretical quantity of interest is the Shapley value. The Shapley value is a concept of cooperative game theory, which can be summarized as the value of a player in the complete group of players that are taking part to the cooperative game.

If one sees the overall tensor network prediction as a cooperative game and the input features of the data for said tensor network the complete group of players, calculating the Shapley value of a feature or a subset of features can be interpreted as the value of said feature or subset of features. Due to the structure of tensor networks, they indeed admit that these concepts from game theory are transferred onto this ML technique.

This allows a further quantity to be considered when assessing the contribution of individual parts of data to the overall prediction of the tensor network.

Reduction of model parameters:

A further important aspect of real-time ML applications is the prediction time. Consequently, with the aid of the above-mentioned protocol, we can efficiently reduce the prediction computational time while maintaining a comparable high prediction power.

However, with TNs, a further step can be made to reduce the prediction time: reducing the bond dimension $k$ after the training procedure.

To this extent, an optimization can be employed, which relies on the elsewhere discussed Singular Value Decomposition in a way that ensures that by reducing the bond dimension the least infidelity, i.e., the least error, possible is introduced.

In other words, the bond dimension $k$ can be adjusted to achieve a targeted prediction time while keeping the prediction accuracy reasonably high. Importantly, this can be done without relearning a new model as would be the case with NN.

Embedded systems - Adaption to hardware:

The tensors comprising the learned tensor network can be rewritten into matrices. This can be understood as a simple reordering of the indices of the tensor. Importantly, by doing this operation, the prediction routine using the tensor network can be formulated as a set of matrix-matrix-multiplications to be computed. Moreover, this can be specifically implemented for the execution on different hardware architectures ranging from CPU over GPUs, TPUs and FPGAs to other architectures, such as quantum computers. Accordingly, the tensor network discussed herein can be adapted perfectly to any hardware. Moreover, including the truncation of the TN further improves this flexibility with respect to the hardware and further enables to balance prediction speed versus prediction accuracy on the fly when executing the prediction.

When comparing different models used for machine learning with regard to their scaling of the computational complexity in terms of the system size for the above discussed information-theoretical quantities varies substantial differences can be observed.

While inherently transparent ML methods (e.g., linear regression) can determine these values exactly analytically, the exact calculation of these values is not possible for more complex ML methods (e.g., neural networks) and can only be approximated by sampling. In the case of neural networks, this sampling is particularly expensive and scales exponentially with the number of features (the dimension of the ML problem).

Advantageously, tensor networks, especially tree tensor networks, can compute these values exactly and in a small effort compared to the learning time: the numerical scaling with number of features (= number of tensors $N$) to this is $O(log(N))$. Thus, this favorable logarithmic scaling is opposed to the computationally expensive exponential scaling in the case of neural networks. Due to this, this computation is also often not feasible in practice for neural networks, or only conditionally for sufficiently small ML models with few data features, while the tensor networks require a negligible fraction of the actual learning effort for this.

To summarize, the present invention aims at making the patterns extracted in supervised machine learning transparent and comprehensible and to reduce them to relevant influencing variables and, on the other hand, to generate new points not contained in the data set, while at the same time essentially keeping up with established methods in terms of accuracy of the extracted pattern. To this end, the present invention provides, among others, two elements that can be described by the terms " (extended) explainability" and "generative learning".

Extended explainability refers to the ability to determine the importance not only of a single input variable, but also of one or more groups of input variables. This is particularly relevant in cases where it is not individual input variables but their proper combination that makes the decision. While most modern learning algorithms have the ability to learn these combinations, tensor networks provide the additional ability to explain them. This advantage applies both to explaining an overall model and to explaining individual decisions.

Generative learning refers to the ability to derive corresponding possible input variables from a trained model for given output variables. Intuitively, this corresponds to an inversion of the model. In contrast to other generative approaches, such as in the case of neural networks, it is not necessary in this case to generate a new (additional) model or to simulate spurious signals.

Although detailed embodiments have been described, these only serve to provide a better understanding of the invention defined by the independent claims and are not to be seen as limiting to the present invention.

**Claims**

1.  A method of using a tensor network for optimizing a process towards providing a targeted result, the method comprising the steps of:

    learning the tensor network using data comprising a set of input data and output data;
    computing at least one information-theoretical quantity of a plurality of features of the tensor network, thereby identifying a relevance value of each of the plurality of features; and identifying a predetermined number of most relevant features according to the relevance values.

2. The method according to claim 1, further comprising the step of:
re-learning the tensor network with data restricted to the most relevant features.

3. The method according to claim 1 or 2, further comprising the steps of:

finding restricted input data restricted to the most relevant features that minimizes a distance between the tensor network and the targeted output;
applying the restricted input data to the process, thereby obtaining restricted output data; and determining, by comparing the restricted output data with the targeted result, whether the restricted input data is targeted input data.

4. The method according to any one of claims 1 to 3, further comprising the step of:
adding, if the restricted input data is not targeted input data, the pair of restricted input data and restricted output data to the data.

5. The method according to any one of claims 1 to 4, wherein the training is one of supervised learning, unsupervised learning or reinforcement learning.

6. The method according to any one of claims 1 to 5, wherein the learning is performed locally or globally or using automatic differentiation.

7. The method according to any one of claims 1 to 6, wherein the tensor network is a tree tensor network and/or a tree tensor ensemble.

8. The method according to any one of claims 1 to 7, wherein the method further comprises the steps of:

computing a singular value decomposition of the tensor network, thereby obtaining a set of singular values corresponding to the tensor network;
removing from the set of singular values a subset of singular values, thereby obtaining the reduced tensor network; and estimating an error introduced by removing the subset of singular values using the set of singular values,
wherein optionally the subset is a subset of smallest singular values.

9. The method according to any one of claims 1 to 9,

wherein a representation of the tensor network is adjustable to a type and/or configuration of hardware used,
wherein optionally the type of hardware is one of:
one or more central processing units, one or more graphics processing unit, one or more field-programmable gate array, one or more quantum processing unit, one or more quantum computer, or one or more tensor processing units.

10. The method according to any one of claims 1 to 9, wherein the method further comprises the step of:
computing at least one information-theoretical quantity of each feature of any input data or restricted input data of the tensor network with respect to the output data or restricted output data, respectively, thereby identifying a contribution of each of the features of the tensor network to the output data or restricted output data, respectively.

11. The method according to any one of claims 1 to 10, wherein the method further comprises the step of:
computing at least one correlation among the input data and/or output data.

12. The method according to any one of claims 1 to 11, wherein the process is a manufacturing process, and the targeted result represents a manufactured product or at least one attribute of the manufactured product.

13. The method according to any one of claims 1 to 11, wherein the process is autonomous driving, and the targeted result is a decision made during autonomous driving.

14. The method according to any one of claims 1 to 11, wherein the process is a financial decision process, and the targeted result is a decision made during the financial decision process.

15. An apparatus comprising a processor configured to perform a method using a tensor network for optimizing a process towards providing a targeted result, the method comprising of the steps of:

learning the tensor network using data comprising a set of input data and output data;
computing at least one information-theoretical quantity of a plurality of features of the tensor network, thereby identifying a relevance value of each of the plurality of features; and identifying a predetermined number of most relevant features according to the relevance va-

lues.

FIG. 1

FIG. 2

Tensor Network

**FIG. 3**

(a)

Matrix Product States (MPS)
*or*
Tensor Trains

(c)

Tree Tensor Networks (TTN)
*or*
Hierarchical Tucker Trees

(b)

Projected Entangled Pair States (PEPS)

(d)

Multi-Scale Entanglement
Renormalisation Ansatz (MERA)

**FIG. 4**

**FIG. 5**

**FIG. 6**

Learning tensor network — S1

Computing information-theoretical
quantity, thereby identifying
relevance values — S2

Identifying most relevant features — S3

**FIG. 7**

**100**

| Processor | ~101 |

| Memory | ~102 |

| Communication Interface | ~103 |

**FIG. 8**

Europäisches
Patentamt

European
Patent Office

Office européen
des brevets

# EUROPEAN SEARCH REPORT

Application Number

EP 23 18 0551

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FELSER TIMO ET AL: "Quantum-inspired machine learning on high-energy physics data", ARXIV:1501.02813, vol. 7, no. 1, 15 July 2021 (2021-07-15), XP093105817, ISSN: 2056-6387, DOI: 10.1038/s41534-021-00443-w Retrieved from the Internet: URL:https://www.nature.com/articles/s41534-021-00443-w.pdf> * the whole document * | 1-15 | INV. G06N20/20 G06N5/01 G06N10/60 |
| X | KUNKUN WANG ET AL: "Quantum image classifier with single photons", ARXIV.ORG, CORNELL UNIVERSITY LIBRARY, 201 OLIN LIBRARY CORNELL UNIVERSITY ITHACA, NY 14853, 19 March 2020 (2020-03-19), XP081624617, * abstract * * page 2 * * figure 1 * | 1-15 | |
| X | KUNKUN WANG ET AL: "Experimental realization of a quantum image classifier via tensor-network-based machine learning", ARXIV.ORG, CORNELL UNIVERSITY LIBRARY, 201 OLIN LIBRARY CORNELL UNIVERSITY ITHACA, NY 14853, 2 January 2022 (2022-01-02), XP091123636, DOI: 10.1364/PRJ.434217 * abstract * * sectiosn I, II * * page 7 - page 8 * * figure 1 * | 1-15 | **TECHNICAL FIELDS SEARCHED (IPC)**<br><br>G06N |

-/--

The present search report has been drawn up for all claims

| Place of search | Date of completion of the search | Examiner |
|---|---|---|
| The Hague | 28 November 2023 | Papadakis, Georgios |

Europäisches
Patentamt

European
Patent Office

Office européen
des brevets

# EUROPEAN SEARCH REPORT

**Application Number**

EP 23 18 0551

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | IAN CONVY ET AL: "Mutual Information Scaling for Tensor Network Machine Learning", ARXIV.ORG, CORNELL UNIVERSITY LIBRARY, 201 OLIN LIBRARY CORNELL UNIVERSITY ITHACA, NY 14853, 28 February 2022 (2022-02-28), XP091145949, DOI: 10.1088/2632-2153/AC44A9 * abstract * * Introduction * * sections 3.1, 3.3 * * figure 1 * | 1-15 | |
| X | STOUDENMIRE E M: "Learning Relevant Features of Data with Multi-scale Tensor Networks", ARXIV.ORG, CORNELL UNIVERSITY LIBRARY, 201 OLIN LIBRARY CORNELL UNIVERSITY ITHACA, NY 14853, 31 December 2017 (2017-12-31), XP081203234, DOI: 10.1088/2058-9565/AABA1A * abstract * * section I, II, IV * * figure 1 * | 1-15 | **TECHNICAL FIELDS SEARCHED (IPC)** |

The present search report has been drawn up for all claims

| Place of search | Date of completion of the search | Examiner |
|---|---|---|
| The Hague | 28 November 2023 | Papadakis, Georgios |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M. STOUDENMIRE** ; **D. SCHWAB**. Supervised Learning with Tensor Networks. *Advances in Neural Information Processing Systems*, 2016, vol. 29, 4799
- **E MILES STOUDENMIRE**. Learning relevant features of data with multi-scale tensor networks. *Quantum Sci. Technol.*, 2018, vol. 3, 034003
- **S. MONTANGERO**. Introduction to Tensor Network Methods. Springer Nature Switzerland AG, 2018
- **E. MILES STOUDENMIRE** ; **DAVID J. SCHWAB**. *Supervised Learning with Quantum-Inspired Tensor Networks*
- **MARKUS HAURU** ; **MAARTEN VAN DAMME** ; **JUTHO HAEGEMAN**. Riemannian optimization of isometric tensor networks. *SciPost Phys.*, 2021, vol. 10, 040